(19)

**Europäisches Patentamt**
**European Patent Office**
**Office européen des brevets**

(11) **EP 4 086 225 A1**

(12) **EUROPEAN PATENT APPLICATION**

(43) Date of publication:
**09.11.2022 Bulletin 2022/45**

(21) Application number: **21382400.6**

(22) Date of filing: **04.05.2021**

(51) International Patent Classification (IPC):
**C01B 32/198** (2017.01)    **C01B 32/00** (2017.01)
**B01J 13/00** (2006.01)

(52) Cooperative Patent Classification (CPC):
**C01B 32/198; B01J 13/0091; C01B 32/00;**
C01P 2006/10; C01P 2006/12; C01P 2006/14;
C01P 2006/16; C01P 2006/40

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicants:
• **Consejo Superior de Investigaciones Científicas**
  **(CSIC)**
  **28006 Madrid (ES)**
• **Universidad De Oviedo**
  **33003 Oviedo (ES)**

(72) Inventors:
• **ARENILLAS DE LA PUENTE, Ana**
  **33011 Oviedo (Asturias) (ES)**
• **MONTES MORÁN, Miguel Ángel**
  **33011 Oviedo (Asturias) (ES)**
• **MENÉNDEZ DÍAZ, José Ángel**
  **33011 Oviedo (Asturias) (ES)**
• **DOS SANTOS GÓMEZ, Lucía**
  **33003 Oviedo (Asturias) (ES)**
• **GARCÍA MENÉNDEZ, José Rubén**
  **33003 Oviedo (Asturias) (ES)**
• **GARCÍA GRANDA, Santiago**
  **33003 Oviedo (Asturias) (ES)**

(74) Representative: **Pons**
  **Glorieta Rubén Darío 4**
  **28010 Madrid (ES)**

(54) **3D GRAPHENE AEROGELS**

(57)    The present invention relates to three-dimensional (3D) graphene aerogels which exhibit ultra-low density, large macroporosity and high electrical conductivity values and its process of obtainment. Said 3D graphene aerogels with controlled porosity and high electrical conductivity are extremely attractive for their application in several fields, especially as electrode materials for electrochemical devices such as supercapacitors, batteries, fuel cells and sensors. Therefore, the present invention also refers to an electrode for electrochemical energy devices comprising said 3D graphene aerogels.

EP 4 086 225 A1

**Description**

The present invention relates to three-dimensional (3D) graphene aerogels which exhibit ultra-low density, large macroporosity and high electrical conductivity values and their process of obtainment. Said 3D graphene aerogels with controlled porosity and high electrical conductivity are extremely attractive for their application in several fields, especially as electrode materials for electrochemical devices such as supercapacitors, batteries, fuel cells and sensors. Therefore, the present invention also refers to an electrode for electrochemical devices comprising said 3D graphene aerogels.

**BACKGROUND ART**

The design of materials with tailored chemical and physical characteristics has rapidly grown in the recent years. Several research studies have been focused on synthetic carbonaceous materials because their structural, morphological, thermal and electrical properties can be eventually controlled during the synthesis procedure. This characteristic has allowed the development of a wide variety of materials, i.e. carbon aerogels, with specific applications, such as catalytic supports, thermal insulators, chemical adsorbents and energy storage materials.

The most significant characteristic of carbon aerogels is that their porous properties, mesoporosity and macroporosity, can be tailored during the synthesis procedure by choosing the adequate reagents and conditions, among which the most prominent are the type of catalyst, pH, concentration, temperature and time of the different synthesis steps.

For example, in the gelation stage of the resorcinol/formaldehyde (R/F) aerogels, the polycondensation of both molecules produces spherical nodules that cross-link to each other during the curing stage. After that, the empty space between all the nodules becomes pores with a specific size, depending of the size of the nodules, in the drying step. Hence, the porosity can be varied with high precision by controlling the sizes of these nodules, which leads to design aerogels with specific porous texture [Rey-Raap, N., Menéndez, J.A. & Arenillas, A. Simultaneous adjustment of the main chemical variables to fine-tune the porosity of carbon xerogels. Carbon 78, 490-499 (2014).]

Moreover, the extremely large porosity of the aerogels provides unique characteristics, such as low thermal conductivity, ultralow density and large specific surface area. Nevertheless, carbon aerogels do not simultaneously possess both large porosity and ultrahigh electrical conductivity, which are normally opposed properties. This is because a high porosity implies an amorphous structure with several defects, besides a well-developed open porous structure, which are not favourable for the transfer of electrons while an ordered and connected carbon structure is required in order to get high electrical conductivity [Wang, Q., Yan, J. & Fan, Z. Carbon materials for high volumetric performance supercapacitors: design, challenges and opportunities. Energy Environ. Sci. 9, 729-762 (2016) and Zhang, L.L., Zhao, X., Stoller, M.D., Zhu, Y., Hengxing, J., Murali, S., Wu, Y., Perales, S., Clevenger, B. & Ruoff, R.S. Highly conductive and porous activated reduced graphene oxide films for high-power supercapacitors. Nano Lett. 12, 1806-1812 (2012)]. In this sense, further investigations on highly conductor aerogels are necessary to obtain a combination of both properties in a single material.

On the contrary, ordered carbon materials, such as graphene, present high electron mobility; but, although in some cases it may exhibit large specific surface area, it usually presents low porosity. Thus, the combination of 2D graphene with a binder material to create a 3D carbon material that integrates the intrinsic properties of graphene with a high pore volume has been intensively pursued [Worsley, M.A., Pauzauskie, P.J., Olson, T.Y., Biener, J., Satcher, J.H. & Baumann, T.F. Synthesis of graphene aerogel with high electrical conductivity. J. Am. Chem. Soc. 132, 14067-14069 (2010); Lee, C., Wei, X., Kysar, J.W. & Hone, J. Measurement of the elastic properties and intrinsic strength of monolayer graphene. Science 321, 385-388 (2008) and Bianco, A., Chen, Y., Chen, Y., Ghoshal, D., Hurt, R.H., Kim, Y.A., Koratkar, N., Meunier, V. & Terrones, M. A carbon science perspective in 2018: current achievements and future challenges. Carbon 132, 785-801 (2018).]

Different binder materials, including organic molecules, metal ions and polymers have been investigated to create porous graphene aerogels [Huang, H., Chen, P., Zhang, X., Lu, Y. & Zhan, W. Edge-to-edge assembled graphene oxide aerogels with outstanding mechanical performance and superhigh chemical activity. Small 9, 1397-1404 (2013); Bai, H., Li, C., Wang, X. & Shi, G. On the gelation of graphene oxide. J. Phys. Chem. C 115, 5545-5551 (2011); Li, C., Wu, Z.Y., Liang, H.W., Chen, J.F. & Yu, S.H. Ultralight multifunctional carbon-based aerogels by combining graphene oxide and bacterial cellulose. Small 13, 1700453 (2017) and Ye, S., Liu, Y. & Feng, J. Low-density, mechanical compressible, water-induced self-recoverable graphene aerogels for water treatment. ACS Appl. Mater. Interfaces 9, 22456-22464 (2017)].

Because of the low dispersive properties of graphene, oxygen functionalized graphene (GO) with acceptable solubility is utilized instead of pristine graphene as a building block for constructing 3D graphene networks [Hu, K., Szkopek, T. & Cerruti, M. Tuning the aggregation of graphene oxide dispersions to synthesize elastic, low density graphene aerogels. J. Mater. Chem. A 5, 23123-23130 (2017); Huang, H., Chen, P., Zhang, X., Lu, Y. & Zhan, W. Edge-to-edge assembled graphene oxide aerogels with outstanding mechanical performance and superhigh chemical activity.

Small 9, 1397-1404 (2013) and Yang, H., Li, Z., Lu, B., Gao, J., Jin, X., Sun, G., Zhang, G., Zhang, P. & Qu, L. Reconstruction of inherent graphene oxide liquid crystals for large-scale fabrication of structure-intact graphene aerogel bulk toward practical applications. ACS Nano 12, 11407-11416 (2018)]. The oxygenated groups of graphene oxide sheets, i.e., hydroxyl, aldehyde or carboxyl are the principal covalent linking sites with the binder material. However, the addition of a binder does not always allow to a satisfactory morphology with adequate porosity.

The development of 3D graphene aerogels with controlled porosity and high electrical conductivity is extremely attractive for their application in several fields, especially as electrode materials for electrochemical energy devices such as supercapacitors, batteries and fuel cells [Cao, X., Yin, Z. & Zhang, H. Three-Dimensional Graphene Materials: Preparation, Structures and Application in Supercapacitors. Energy Environ. Sci. 7, 1850-1865 (2014) and Nardecchia, S., Carriazo, D., Ferrer, M.L., Gutiérrez, M.C. & del Monte, F. Three dimensional macroporous architectures and aerogels built of carbon nanotubes and/or graphene: synthesis and applications. Chem. Soc. Rev. 42, 794-830 (2013)]. Moreover, to the best of our knowledge, it has not been prepared graphene aerogels which possesses at the same time both porosity and electrical conductivity high enough to be commercially used.

Thus, it is needed to develop aerogels that are able to face and overcome all the issues presented so far.

## DETAILED DESCRIPTION OF THE INVENTION

Aerogels are solid materials with an extremely high porosity (higher than 90 %), so most of their volume is air, obtained by a sol-gel process. All the precursor compounds contained in the initial solution (i.e. sol) react to form a colloidal system increasing the viscosity of the mixture (i.e. gel). During this process, continuous polymerization and cross-linking reactions take place until the colloidal suspension turns to a polymeric solid with the initial solvent filling the voids of its structure. After the elimination of the solvent (i.e. drying process) the aerogel is finally obtained. Aerogels therefore have very high porosity, low density and large surface area.

The graphene aerogels of the present invention exhibit simultaneously ultra-low density, large macroporosity high electrical conductivity values as well as high porosity. Their features make them suitable for a wide range of applications in different areas, especially on electrochemical devices, as electrode materials for electrochemical devices such as supercapacitors, batteries, fuel cells and sensors.

In particular, the present invention refers to three-dimensional aerogels (herein the aerogels of the invention) consisting of a plurality of crystalline reduced graphene oxide sheets and a resorcinol-formaldehyde polymer (R/F polymer) wherein the resorcinol-formaldehyde polymer is disposed between the crystalline reduced graphene oxide sheets and randomly forms covalent bonds with said crystalline reduced graphene oxide sheets.

The R/F polymer forms covalent bonds with the oxygenated groups (hydroxyl, aldehyde and carboxyl groups) of the graphene oxide sheets what allows the formation of porous and well-connected networks. The resulting structures of the aerogels possess a good robustness due to such covalent unions.

In the aerogels of the present invention the graphene sheets are linked enough to allow the electrical percolation limit to be achieved (i.e. the percolation threshold is reached). Therefore, it is important to highlight that the graphene content in the aerogels is optimized to allow a good connection between the graphene sheets.

In a first aspect, the present invention refers to an aerogel of the invention wherein the content of the crystalline reduced graphene oxide sheets ranges between 39 wt.% and 41 wt% and said aerogel has:

- a porosity of between 97 % and 99 %,
- macropores of average size between 50 $\mu$m and 100 $\mu$m,
- an electrical conductivity of between 710 S/m and 730 S/m at 25°C,
- a density of between 70 mg/cm$^3$ and 80 mg/cm$^3$, and
- a BET surface of between 350 m$^2$/g and 450 m$^2$/g.

The density and the porosity percentage were determined by using He pycnometry (the instruments used is AccuPyc 1330 pycnometer from Micromeritics and an adapted tap density by using Geopyc 1360 device from Micromeritics). All samples were previously outgassed in a VAcPrep 0.61 device (Micromeritics) at 120 °C for 12 h to eliminate possible physisorbed gases and humidity. $N_2$ adsorption-desorption isotherms were recorded in a Tristar 3020 instrument (Micromeritics) at - 196 °C. Brunauer-Emmett-Teller equation was applied to calculate the BET surface area (SBET). $N_2$ adsorption-desorption isotherms and mercury porosimetry were used to determine the total pore volume. The macropores size was determined by means of mercury porosimetry (using an Autopore IV 9500 apparatus from Micromeritics). The in-plane conductivity of the materials was measured by studying the resistivity of a film made with the samples studied by using the four-probe method and the Van der Pauw equation. A four-point probe equipment (SR-4-6L, Everbeing) was employed to do these measurements in air and at 25°C.

The term "macropores" in the present invention corresponds to pores of a size larger than 50 nanometers and less than 1 millimeter.

This aerogel has a natural sea sponge shape morphology with larger macropores.

In a preferred embodiment, the present invention refers to an aerogel wherein the content of the crystalline reduced graphene oxide sheets is 40 wt%, the porosity is 97.6%, the electrical conductivity is 719S/m at 25°C, the density is 73 mg/cm$^3$ and the BET surface is 385 m$^2$/g.

In a preferred embodiment, the macropores have an average size of 96 $\mu$m

Another aspect of the present invention refers to the process for obtaining the aerogel described in the first aspect of the invention which comprises the following steps:

a) preparing a precursor solution of resorcinol (R), formaldehyde (F) and graphene oxide (GO) by dissolving resorcinol in a graphene oxide aqueous suspension under constant stirring, said graphene oxide aqueous suspension having a concentration in graphene oxide between 5mg/ml and 10 mg/ml, and, then, adding formaldehyde,
wherein the moles of formaldehyde added are double that the moles of resorcinol and wherein the dilution ratio (D) is 200, being dilution ratio (D) = (moles R+ moles F)/(mol of total solvent)
b) heating the precursor solution obtained in step (a) at a temperature range between 70 °C and 95 °C by means of a microwave oven for a period of time of at least 3 h,
c) dehydrating the organic polymer obtained in step (b) by means of a freeze-dryer for a period of time of at least 24 h, and
d) carbonizing the dried aerogel obtained in step (c) at a temperature between 1000 °C and 1100 °C, under inert atmosphere for a period of time of at least 1 h.

This process is performed in the absence of catalyst, such as NaOH, for the polycondensation reaction between the resorcinol and formaldehyde that takes place in step b).

The term of "mol of total solvent" mentioned in step a) (in the formula of D) refers to the total moles of the liquid part of the precursor solution (water of the GO suspension and water and the stabilizing methanol of the formaldehyde solution, in case that formaldehyde F is added in the form of a water/methanol solution).

The heating of step (b) is performed by means of a microwave oven which is a very competitive, economic, efficient and well-stablished method, reducing the time and production costs considerably. Moreover, the dehydrating step (c) is crucial for maintaining the morphology of the organic aerogel. In last step (d) the carbonization of the dried aerogel obtained in step (c) results in the obtainment of the carbon aerogel and the reduction of the graphene oxide to reduced graphene oxide.

The formaldehyde is added in stoichiometric amount with respect to resorcinol that corresponds to a molar ratio R/F of 0.5. In step b) formaldehyde and resorcinol react between them to form the polymer that randomly forms covalent bonds with said crystalline reduced graphene oxide sheets.

In a preferred embodiment, a graphene oxide aqueous suspension mentioned in step a) has a concentration in graphene of 5mg/ml..

In a preferred embodiment, the formaldehyde is added in the form of a water solution, or water/methanol solution, in a concentration of between 36 wt.% and 38 wt. % , more preferably of 37 wt.%.

In a preferred embodiment, the heating of step (b) is carried out at 85 °C and /or between 3 h and 5 h, more preferably, for 3h

In a preferred embodiment, the dehydrating step (c) is carried out a time between 24 h and 72 h, more preferably, for 24 h.

In a preferred embodiment, the carbonizing step (d) under inert atmosphere is carried out at a temperature of 1000 °C and/or between 1 h and 2 h, more preferably, for 1h.

The term "inert atmosphere" refers to a gas which is non-reactive at the carbonizing step temperature (e.g. N$_2$, He, Ar and other noble gases).

The invention also refers to an aerogel obtained by the above-described method. The aerogel obtained has the features indicated in the first aspect of the invention.

Another aspect of the invention refers to an aerogel of the invention, wherein the content of crystalline reduced graphene oxide sheets ranges between 15 wt.% and 17 wt.% in the aerogel and said aerogel has

• a porosity of between 95 % and 97 %,
• macropores of average size between 5 $\mu$m and 15 $\mu$m,
• an electrical conductivity of between 850 S/m and 870 S/m at 25°C,
• a density of between 80 mg/cm$^3$ and 85 mg/cm$^3$, and
• a BET surface of between 400 m$^2$/g and 450 m$^2$/g.

The density and the porosity percentage were determined by using He pycnometry (AccuPyc 1330 pycnometer from Micromeritics) and an adapted tap density by using Geopyc 1360 device (Micromeritics). All samples were previously outgassed in a VAcPrep 0.61 device (Micromeritics) at 120 °C for 12 h to eliminate possible physisorbed gases and humidity. $N_2$ adsorption-desorption isotherms were recorded in a Tristar 3020 instrument (Micromeritics) at -196 °C. Brunauer-Emmett-Teller equation was applied to calculate the BET surface area (SBET). $N_2$ adsorption-desorption isotherms and mercury porosimetry were used to determine the total pore volume. The macropores size was determined by means of mercury porosimetry using an Autopore IV 9500 apparatus (Micromeritics). The in-plane conductivity of the materials was measured by studying the resistivity of a film made with the samples studied by using the four-probe method and the Van der Pauw equation. A four-point probe equipment (SR-4-6L, Everbeing) was employed to do these measurements in air and at room temperature (25°C).

In a preferred embodiment, the present invention refers to an aerogel wherein the content of the crystalline reduced graphene oxide sheets is 16 wt%, a porosity of 96%, a electrical conductivity of 852S/m at 25°C, a density of 82 mg/cm$^3$ and a BET surface of 422 m$^2$/g.

In a preferred embodiment, the macropores have an average size of 13 $\mu$m

The 3D aerogel described in the third aspect of the present invention is obtained following the next steps:

a) preparing a precursor solution of resorcinol (R), formaldehyde (F) and graphene oxide (GO) by dissolving resorcinol in a graphene oxide aqueous suspension under constant stirring, said graphene oxide aqueous suspension having a concentration in graphene oxide between 5mg/ml and 10 mg/ml, and, then, adding formaldehyde, wherein the moles of formaldehyde added are double that the moles of resorcinol and wherein the dilution ratio (D) is 60, being

$$\text{dilution ratio (D)} = (\text{moles R+ moles F})/(\text{mol of total solvent})$$

b) adjusting the pH of the precursor solution obtained in step (a) to 5 by adding NaOH,
c) heating the mixture obtained in step (b) at a temperature range between 70 °C and 95 °C by means of a microwave oven for a period of time of at least 3 h,
d) dehydrating the organic polymer obtained in step (c) by means of a freeze-dryer for a period of time of at least 24 h,
e) carbonizing the dried aerogel obtained in step (d) at a temperature between 1000 °C and 1100°C, under inert atmosphere for a period of time of at least 1 h.

The formaldehyde is added in stoichiometric amount with respect to resorcinol that corresponds to a molar ratio R/F of 0.5. In step b) formaldehyde and resorcinol react between them to form the polymer (polycondensation reaction) that randomly forms covalent bonds with said crystalline reduced graphene oxide sheets.

The term of "mol of total solvent" mentioned in step a) (in the formula of D) refers to the total moles of the liquid part of the precursor solution (water of the GO suspension and water and the stabilizing methanol of the formaldehyde solution, in case that formaldehyde is added in the form of a water/methanol solution)).

The NaOH added in step (b) is working herein as a catalyst of the polycondensation reaction. Therefore, this is a catalysed process, meanwhile the process to obtain the aerogel of the first aspect of the invention is a uncatalyzed process. The NaOH favours the polymerisation reaction, so the final polymer is different from the one obtained in absence of NaOH from the same dilution ratio (D), giving rise to a different porosity and different conductivity, as can be seen in the examples provided in the description.

In a preferred embodiment, a graphene oxide aqueous suspension mentioned in step a) has a concentration in graphene oxide of 5mg/ml.

In a preferred embodiment, the formaldehyde is added in the form of a water solution or water/methanol solution in a concentration of between 36 wt.% and 38 wt. % , more preferably of 37 wt.%.

In a preferred embodiment, the NaOH is added as an NaOH having a concentration between 0.5 and 3 mol/L.

In a preferred embodiment, the heating of step (c) is carried out at 85 °C and /or between 3 h and 5 h, more preferably, for 3h.

In a preferred embodiment, the dehydrating step (d) is carried out a time between 24 h and 72 h, more preferably, for24 h.

In a preferred embodiment, the carbonizing step (e) under inert atmosphere is carried out at a temperature of 1000 °C and/or between 1 h and 2 h, more preferably, for 1h.

The term "inert atmosphere" refers to a gas which is non-reactive at the carbonizing step temperature (e.g. $N_2$, He, Ar and other noble gases).

Therefore, another aspect of the present invention refers to said process and to a aerogel obtained by said process. The aerogel obtained in this process has the features described in the aspect of invention just above.

The heating of step (c) is performed by means of a microwave oven which is a very competitive, economic, efficient and well-stablished method, reducing the time and production costs considerably. Moreover, the dehydrating step (d) is crucial for maintaining the morphology of the organic aerogel. In last step (e) the carbonization of the dried aerogel obtained in step (d) results in the obtainment of the carbon aerogel and the reduction of the graphene oxide to reduced graphene oxide.

The processes of obtainment of the 3D aerogels of the present invention are rapid, easy, cost-effective and scalable at industrial level.

The graphene aerogels of the present invention exhibit simultaneously ultra-low density, large macroporosity and high electrical conductivity making them suitable for a wide range of applications in different areas, especially on electrochemical devices, as electrode materials for electrochemical devices such as supercapacitors, batteries, fuel cells and sensors.

Therefore, the last aspect of the present invention refers to an electrode for electrochemical devices comprising any of the aerogels described in the present invention.

Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples, drawings are provided by way of illustration and are not intended to be limiting of the present invention.

## BRIEF DESCRIPTION OF THE DRAWINGS

Fig. 1. (a-d) Schematic representation of the formation of organic graphene aerogels. (e) XRD patterns for the CA-C, CA-60-C and CA-200-unC graphene aerogels.

Figure 2. SEM micrographs of the CA-60-C and CA-200-unC graphene aerogels at different magnifications: 40 $\mu$m, 20 $\mu$m, 5 $\mu$m and 2 $\mu$m.

Figure 3. N2 adsorption-desorption isotherms (a) and pore size (b) distributions obtained from mercury porosimetry for the CA-C, CA-60-C and CA-200-unC graphene aerogels.

Figure 4. Influence of wt.% of graphene oxide in the electrical conductivity values for the CA-C, CA-60-C and CA-200-unC series of graphene aerogels.

## Examples

A new and different concept to create a graphene matrix where the graphene sheets are linked by the carbon R/F polymer is presented herein. To this end, a rapid and economic microwave synthesis procedure is used to obtain ultralight graphene aerogels which combine both a greatly porous structure and an excellent electrical conductivity.

To achieve this combination, a R/F polymer with controllable porosity is employed as binder material and a GO solution (cheaper than pristine graphene) as building blocks to create an ultra-porous graphene network with remarkable electrical conductivity.

Graphene aerogels were prepared by resorcinol(R)/formaldehyde(F) polycondensation reaction with and without catalyst:

Procedure with catalyst (C) :

- Graphene aerogel was synthesized by dissolving resorcinol (R) (Indspec, 99%) in a commercial graphene oxide (GO) suspension (Applynano Solutions S.L., 5 mg/mL) under constant stirring for 1 h. After that, stoichiometric amount (mol ratio R/F=0.5) of formaldehyde (F) commercial solution (Ercros, 37 wt.% in water, 10-15% methanol) was incorporated and the resulting mixture was stirred for 5 minutes to ensure a uniform distribution of all reagents. The dilution ratio (D) ranges from 20 to 60, which is related to the molar ratio between reactants and total solvent added to the precursor solution (D=(moles R+ moles F)/(mol of total solvent); in this case, mol of total solvent= (moles of water in the GO suspension)+(moles of water in the formaldehyde solution)+(moles of methanol in the formaldehyde solution). The pH was adjusted to 5 by adding a NaOH solution (1 mol/L), which acts as catalyst for the polycondensation reaction. Then, the solution was heated at 85 °C for 3 h in a microwave oven in order to accelerate the gelation process. Organic aerogels (OA) were dehydrated by sublimating the water in a freeze-dryer (FD) for 24 hours. Finally, the dried aerogels were carbonized at 1000 °C for 1 h under a $N_2$ regular flow of 150 mL/min and a heating rate of 1 °C/min in order to get the carbon aerogel (CA) and reduce the GO to reduced GO (rGO). The estimated percentages of graphene (rGO) are ranging from 6-28 wt.%.

Procedure without catalyst (unC)

- Graphene aerogel was synthesized by dissolving resorcinol (Indspec, 99%) in a commercial graphene oxide (GO) suspension (Applynano Solutions S.L., 5 mg/mL) under constant stirring for 1 h. After that, stoichiometric amount (mol ratio R/F=0.5) of formaldehyde commercial solution (Ercros, 37 wt.% in water, 10-15% methanol) was incorporated and the resulting mixture was stirred for 5 minutes to ensure a uniform distribution of all reagents. The dilution ratio (D) ranges from 40 to 200, which is related to the molar ratio between the reactants and total solvent added to the precursor solution (D=(moles R+ moles F)/(mol of total solvent); in this case, mol of total solvent= (moles of water in the GO suspension)+(moles of water in the formaldehyde solution)+(moles of methanol in the formaldehyde solution). Then, the solution was heated at 85 °C for 3 h in a microwave oven in order to accelerate the gelation process. Organic aerogels (OA) were dehydrated by sublimating the water in a freeze-dryer (FD) for 24 hours. Finally, the dried aerogels were carbonized at 1000 °C for 1 h under a $N_2$ regular flow of 150 mL/min and a heating rate of 1 °C/min in order to get the carbon aerogel (CA) and reduce the GO to reduced GO (rGO). The estimated percentages of graphene (rGO) are ranging from 11-40 wt.% *Comparative examples:* Organic aerogels (OA) were dehydrated by two processes: (i) the water was evaporated by thermal treatment (TT) in a furnace at 120 °C until constant weight, and (ii) the water was sublimated in a freeze-dryer (FD) for 24 hours. FD method is preferred since it allows maintaining the morphology of the as-synthesized organic aerogel since the solvent is sublimated much more slowly, preserving the highly porous structure of the organic aerogel.

*Structural, morphological and porous characterization. Electrical measurements:*

All aerogels were studied by X-ray diffraction (XRD) with a D8 Advance (Bruker) diffractometer and sealed-tube CuK$\alpha$1 radiation. A Göbel mirror configuration was employed to collect the reflected radiation. The total measurement time was 1 h over 5-80° (2θ) angular range. Phase identification was performed with X'Pert HighScore Plus program51.

Thermogravimetric analyses (TGA) were carried out on a SDTQ600 analyzer (TA Instruments) under a regular $N_2$ airflow of 20 mL/min at a heating rate of 1 °C/min from room temperature to 1000 °C.

The morphology of the aerogels was examined by scanning electron microscopy (SEM, Quanta FEG 650) equipped with an EDT secondary electron detector (Everhart-Thornley); and by high-resolution transmission electron microscopy (HRTEM, JEOL 2100Plus).

The porosity percentage and the density of the samples were determined by using an AccuPyc 1330 pycnometer (Micromeritics) and a Geopyc 1360 device (Micromeritics). All samples were previously outgassed in a VAcPrep 0.61 device (Micromeritics) at 120 °C for 12 h to eliminate possible physisorbed gases and humidity. $N_2$ adsorption-desorption isotherms were recorded in a Tristar 3020 instrument (Micromeritics) at -196 °C. Brunauer-Emmett-Teller equation was applied to calculate the BET surface area (SBET). The $N_2$ adsorbed at the saturation point was used to determine the total pore volume. The meso-macroporous structure was determined by means of mercury porosimetry using an Autopore IV 9500 apparatus (Micromeritics).

The in-plane conductivity of the materials was measured by studying the resistivity of a film made with the samples studied by using the four-probe method and the Van der Pauw equation. A four-point probe equipment (SR-4-6L, Everbeing) was employed to do these measurements in air and at room temperature.

The films for these measurements were made by mixing the carbon aerogels with a 10 wt.% polytetrafluoroethylene (PTFE) as binder material until a homogeneous mixture was obtained. After that, the resulting powders were uniaxially pressed into circular films of 1 cm and 200-300 $\mu$m of diameter and thickness, respectively.

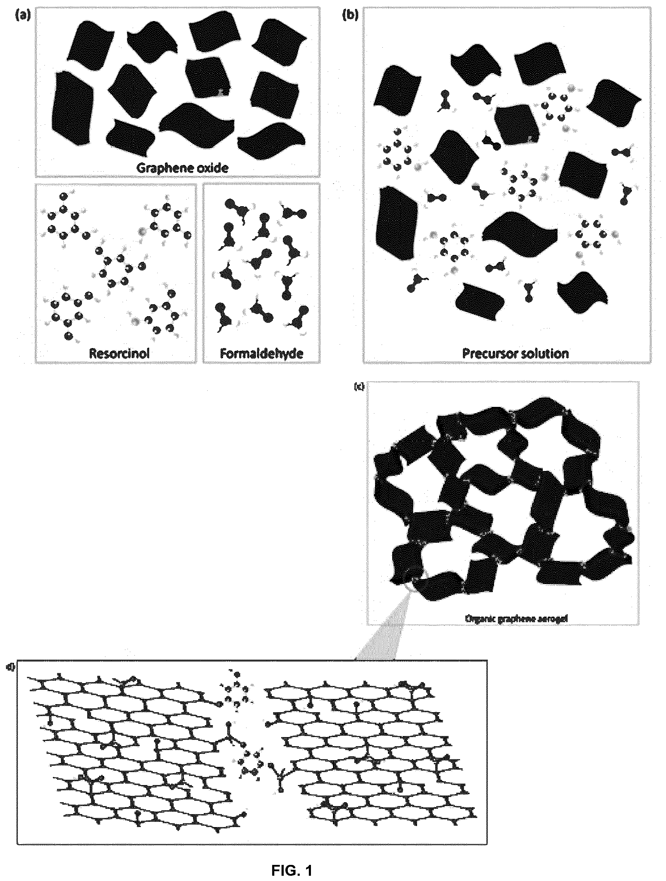

The polycondensation reactions of resorcinol and formaldehyde molecules with the oxygenated groups of the graphene oxide sheets allow the formation of porous and well-connected networks (Figure 1a-d). For that, not only the R/F polymer attaches the graphene oxide surface, but also hydroxyl, aldehyde and carboxyl groups of the graphene oxide sheets react with the formaldehyde and resorcinol molecules via covalent cross-linking (Figure1d). The resulting structures of the aerogels possess a good robustness due to such covalent unions.

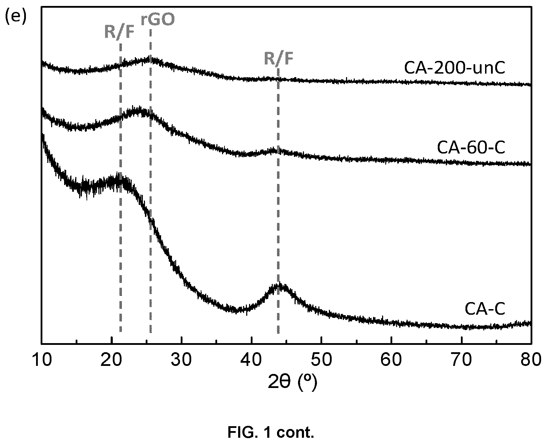

Figure 1e displays the XRD patterns of XRD patterns for the CA-C, CA-60-C and CA-200-unC. graphene aerogels. Two broad peaks are observed for the R/F aerogel without graphene, CA-C, at 20.5 and 44.1° (2θ), which are assigned to the (002) and (101) reflections of carbons with low structural order, respectively (Golsheikh, A.M., Huang, N.M., Lim, H.N. & Zakaria, R. One-pot sonochemical synthesis of reduced graphene oxide uniformly decorated with ultrafine silver nanoparticles for non-enzymatic detection of H2O2 and optical detection of mercury ions. RSC Adv. 4, 36401-36411 (2014*)).* The (002) peaks narrow as the amount of reduced graphene increases in the graphene aerogels, with its maximum shifting to higher 2θ degrees (up to 24.5°). At the same time, the intensity of the (101) reflection weakens with the graphene content. As a result, the XRD pattern of CA-60·2-C resembles that of pure rGO.

The morphology of the 3D network slightly changes with the graphene content. Catalyzed aerogels with low amount of graphene present structures formed by individual and randomly distributed graphene sheets with a high degree of carbonized R/F coating. These sheets are linked by the carbonized R/F polymer, forming the 3D framework.

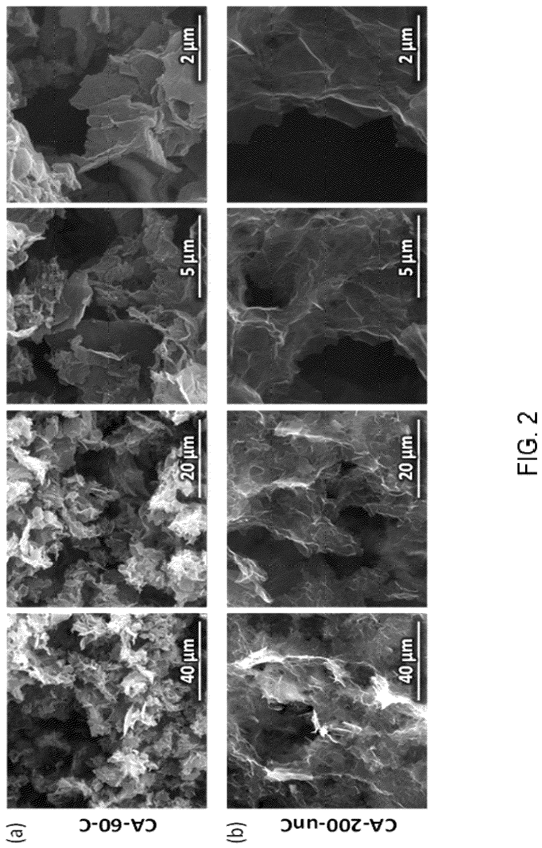

However, when the graphene content increases, the degree of carbonized R/F coating decreases, producing that the graphene sheets gradually roll and fold and, consequently, the porosity of the network increases. In addition, the framework architecture of the aerogels is more uniform as the graphene content increases, especially that of CA-60-C, since the graphene sheets tend to align, creating a robust and more ordered structure (Fig. 2).

On the contrary, when the amount of graphene is too high (CA-60-2-C), not all graphene sheets are covered by the carbonized R/F polymer. These uncoated sheets remain trapped inside the 3D network and the porosity of the aerogel decreases.

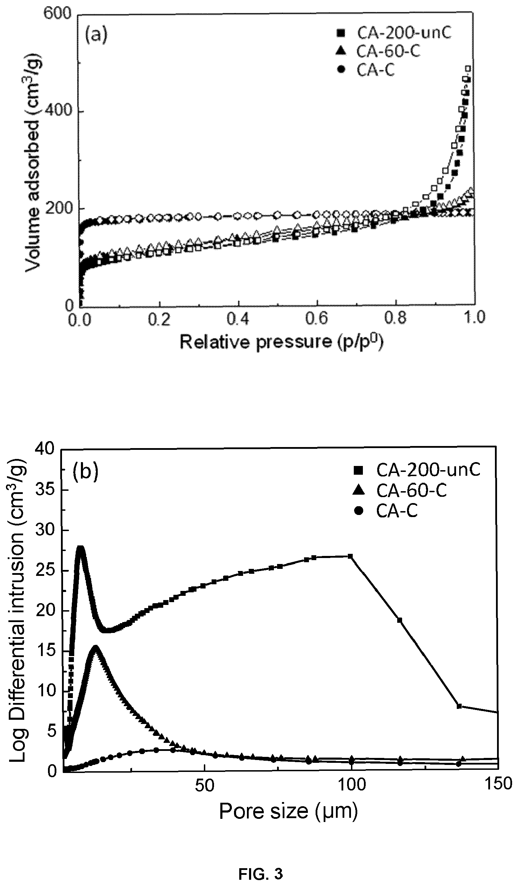

The determination of pore volumes by $N_2$ adsorption is not too precise for materials with wide pores. Therefore, mercury porosimetry was also carried out to calculate the size and volume of macro- and mesopores in these materials (Table 1). The pore size distributions of the catalyzed and uncatalyzed aerogels are shown in Figures 3 a and b.

**Table 1.** Textural properties of the aerogels obtained in this work with different wt.% of graphene.

| Composition | Graphene (wt.%) | Porosity (%) | Density (mg/cm$^3$) | $S_{BET}$ (m$^2$/g) | $V_T$ (cm$^3$/g) | Vmeso (cm$^3$/g) | $V_{macro}$ (cm$^3$/g) | Pore (μm) |
|---|---|---|---|---|---|---|---|---|
| Catalyzed | | | | | | | | |
| CA-C | 0 | 85.49 | 303 | 732 | 2.478 | 0.011 | 2.467 | 35.8 |
| CA-20-C | 6 | 92.80 | 148 | 667 | 6.455 | 0.006 | 6.449 | 1.4 |
| CA-40-C | 11 | 93.23 | 132 | 389 | 8.062 | 0.063 | 7.999 | 5.3 |
| **CA-60-C** | **16** | **96.06** | **82** | **422** | **12.28 9** | **0.024** | **12.26 5** | **13.1** |
| CA-60·2-C | 28 | 92.36 | 136 | -- | -- | -- | -- | -- |
| Uncatalyzed | | | | | | | | |
| CA-40-unC | 11 | 97.71 | 63 | 764 | 15.10 7 | 0.191 | 14.91 6 | 5.6 |
| CA-60-unC | 16 | 98.45 | 44 | 599 | 19.76 8 | 0.270 | 19.49 8 | 6.3 |
| CA-80-unC | 21 | 98.66 | 47 | 651 | 30.29 7 | 0.290 | 30.00 7 | 12.2 |
| CA-100-unC | 25 | 99.24 | 47 | 605 | 37.22 1 | 0.248 | 36.97 3 | 18.8 |
| CA-120-unC | 28 | 99.45 | 48 | 1320 | 39.48 3 | 0.298 | 39.18 6 | 22.9 |
| CA-140-unC | 32 | 99.32 | 39 | 351 | 42.36 2 | 0.472 | 39.01 1 | 48.9 |
| CA-160-unC | 35 | 99.58 | 42 | 496 | 37.93 8 | 0.459 | 37.47 9 | 22.1 |
| CA-180-unC | 37 | 93.58 | 52 | 388 | 44.22 7 | 0.296 | 43.93 1 | 62.6 |
| **CA-200-unC** | **40** | **97.58** | **73** | **385** | **37.835** | **0.354** | **37.481** | **96.1** |

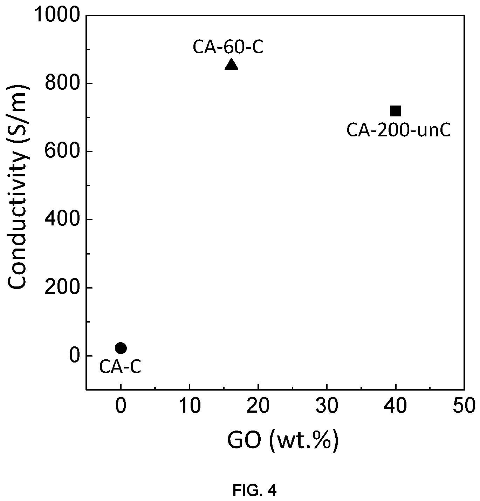

Electrical conductivity values obtained by the four-probe method for the catalyzed and uncatalyzed graphene aerogels are represented in Figure 4. The highest values of electrical conductivity were achieved by CA-60-C and CA-200-unC samples of the catalyzed and uncatalyzed series with 852 and 719 S/cm and 96.06 and 97.58 % of porosity, respectively.

In aerogels with low graphene content and large amount of carbonized R/F polymer, the graphene sheets are not linked enough to allow the electrical percolation limit to be achieved (i.e. the percolation threshold is not reached). This is the reason why the conductivity value of CA-20-C graphene aerogel is more similar to that of the RF aerogel without graphene while CA-60-C possesses an extremely high conductivity value 37 times higher than that of the CA-C aerogel. Therefore, it is important to highlight that the graphene content in the aerogel needs to be high enough to allow a good connection between the graphene sheets.

The conductivities of the uncatalyzed aerogels are lower than those of the catalyzed series (Figure 4b). For example, CA-40-C possesses a conductivity value of 372 S/m while the analogous uncatalyzed aerogel, CA-40-unC, only presents a value of 80 S/m, assuming that both samples have similar graphene content. Moreover, the conductivity differences are more pronounced for the CA-60-C and CA-60-unC, with values of 852 and 109 S/m, respectively. This is related to the porosity and the volume of macropores, which are more elevated for the uncatalyzed samples, producing a lower degree of percolation between the graphene sheets and decreasing the electrical conductivity. Then, the use of a catalyst (NaOH) for the polymerization reaction plays an important role in the characteristics of the final product.

**Table 2.** Electrical conductivity values and porous properties of the aerogels obtained in this work in comparison with the literature.

| Composition | $S_{BET}$ (m$^2$/g) | Density (mg/cm$^3$) | Porosity (%) | K-FPP (S/m) | Ref. |
|---|---|---|---|---|---|
| **CA-60-C** | **422** | **82** | **96.06** | **852** | **This work** |
| **CA-200-unC** | **385** | **73** | **97.58** | **719** | **This work** |
| Graphene aerogel | 244 | 150 | -- | 133 | 1 |
| Graphene aerogel | 512 | 86 | -- | 63 | 2 |
| Graphene aerogel | 584 | -- | -- | 87 | 3 |
| Graphene aerogel | -- | 2 | -- | 17 | 2 |
| Graphene aerogel | -- | 7 | -- | 16 | 4 |
| Graphene aerogel (1500 °C) | 441 | -- | -- | 157 | 5 |
| Carbon sphere aerogels | 609 | 51 | -- | 695 | 6 |
| Cu/CuxO@rGO aerogel | 48 | -- | 97.70 | 430 | 7 |
| Graphene doped carbon xerogel | 1556 | -- | -- | 310 | 8 |
| Graphene aerogel composite | -- | 16 | -- | 25 | 9 |

1. Markovic, Z.M., Babic, B.M., Dramicanin, M.D., Holclajtner Antunovic, I.D., Pavlovic, V.B., Perusko, D.B. & Markovic, B.M.T. Preparation of highly conductive carbon cryogel based on pristine graphene. Synth. Met. 162, 743-747 (2012).
2. Chen, X., Lai, D., Yuan, B. & Fu, M.L. Fabrication of superelastic and highly conductive graphene aerogels by precisely "unlocking" the oxygenated groups on graphene oxide sheets. Carbon 162, 552-561 (2020).
3. Worsley, M.A., Pauzauskie, P.J., Olson, T.Y., Biener, J., Satcher, J.H. & Baumann, T.F. Synthesis of graphene aerogel with high electrical conductivity. J. Am. Chem. Soc. 132, 14067-14069 (2010).
4. Long, S., Feng, Y., He, F., He, S., Hong, H., Yang, X., Zheng, L., Liu, J., Gan, L. & Long, M. An ultralight, supercompressible, superhydrophobic and multifunctional carbon aerogel with a specially designed structure. Carbon 158, 137-145 (2020).
5. Cheng, Y., Zhou, S., Hu, P., Zhao, G., Li, Y., Zhang, X. & Han, W. Enhanced mechanical, thermal, and electric properties of graphene aerogels via supercritical ethanol drying and high-temperature thermal reduction. Sci. Rep. 7, 1439 (2017).
6. Dong, D., Guo, H., Li, G., Yan, L., Zhang, X. & Song, W. Assembling hollow carbon sphere-graphene polylithic aerogels for thermoelectric cells. Nano Energy 39, 470-477 (2017).
7. Zhao, J., Pan, R., Sun, R., Wen, C., Zhang, S.L., Wu, B., Nyholm, L. & Zhang, Z.B. High-conductivity reduced-graphene-oxide/copper aerogel for energy storage. Nano Energy 60, 760-767 (2019).
8. Canal-Rodriguez, M., Arenillas, A., Rey-Raap, N., Ramos-Fernandez, G., Martin-Gullón, I. & Menéndez, J.A. Graphene-doped carbon xerogel combining high electrical conductivity and surface area for optimized aqueous supercapacitors. Carbon 118, 291-298 (2017).
9. Wang, Z., Shen, X., Garakani, M.A., Lin, X., Wu, Y., Liu, X., Sun, X. & Kim, J.K. Graphene aerogel/epoxy composites with exceptional anisotropic structure and properties. ACS Appl. Mater. Interfaces 7, 5538-5549 (2015).

**Claims**

1. A three-dimensional aerogel consisting of:

   a plurality of crystalline reduced graphene oxide sheets and
   a resorcinol- formaldehyde polymer (R/F polymer)
   wherein the resorcinol-formaldehyde polymer is disposed between the crystalline reduced graphene oxide sheets and randomly forms covalent bonds with said crystalline reduced graphene oxide sheets and
   wherein the content of the crystalline reduced graphene oxide sheets ranges between 39 wt.% and 41 wt% and the aerogel has:

   • a porosity of between 97 % and 99 %,
   • macropores of average size between 50 $\mu$m and 100 $\mu$m,
   • an electrical conductivity of between 710 S/m and 730 S/m at 25°C,
   • a density of between 70 mg/cm$^3$ and 80 mg/cm$^3$, and
   • a BET surface of between 350 m$^2$/g and 450 m$^2$/g.

2. The three-dimensional aerogel according to claim 1, wherein the content of the crystalline reduced graphene oxide sheets is 40 wt%, the porosity is 97.6%, the electrical conductivity is 719S/m at 25°C, the density is 73 mg/cm$^3$ and the BET surface is 385 m$^2$/g.

3. A process for obtaining the aerogel described in claims 1 or 2 that comprises the following steps:

   a) preparing a precursor solution of resorcinol (R), formaldehyde (F) and graphene oxide (GO) by dissolving resorcinol in a graphene oxide aqueous suspension under constant stirring, said graphene oxide aqueous suspension having a concentration in graphene oxide between 5mg/ml and 10 mg/ml, and then, adding formaldehyde, wherein the moles of formaldehyde added are double that the moles of resorcinol and wherein the dilution ratio (D) is 200, being:

   $$\text{dilution ratio (D)} = (\text{moles R}+ \text{moles F})/(\text{mol of total solvent})$$

   b) heating the precursor solution obtained in step (a) at a temperature range between 70 °C and 95 °C by means of a microwave oven for a period of time of at least 3 h,
   c) dehydrating the organic polymer obtained in step (b) by means of a freeze-dryer for a period of time of at least 24 h, and
   d) carbonizing the dried aerogel obtained in step (c) at a temperature between 1000 °C and 1100 °C, under inert atmosphere for a period of time of at least 1 h.

4. A process according to claim 3 wherein the graphene oxide aqueous suspension mentioned in step a) has a concentration in graphene oxide of 5mg/ml.

5. A process according to claim 3 or 4 wherein the formaldehyde is added in the form of a water solution or water/methanol solution in a concentration of between 36 wt.% and 38 wt.%.

6. A process according to any of claims 3 to 5 wherein the heating of step (b) is carried out at 85 °C and /or between 3 h and 5 h.

7. A process according to any of claims 3 to 6 wherein the dehydrating step (c) is carried out a time between 24 h and 72 h.

8. A three-dimensional aerogel consisting of

   a plurality of crystalline reduced graphene oxide sheets anda resorcinol-formaldehyde polymer (R/F polymer)
   wherein the resorcinol-formaldehyde polymer is disposed between the crystalline reduced graphene oxide sheets and randomly form covalent bonds with said crystalline reduced graphene oxide sheets and
   wherein the content of the crystalline reduced graphene oxide sheets ranges between 15 wt.% and 17 wt.% in the aerogel and said aerogel has

   • a porosity of between 95 % and 97 %,

• macropores of average size between 5 μm and 15 μm,
• an electrical conductivity of between 850 S/m and 870 S/m at 25°C,
• a density of between 80 mg/cm$^3$ and 85 mg/cm$^3$, and
• a BET surface of between 400 m$^2$/g and 450 m$^2$/g.

9. The three-dimensional aerogel according to claim 8, wherein the content of the crystalline reduced graphene oxide sheets is 16 wt%, a porosity of 96%, a electrical conductivity of 852S/m at 25°C, a density of 82 mg/cm$^3$ and a BET surface of 422 m$^2$/g.

10. A process for obtaining the aerogel described in claims 8 or 9 that comprises the following steps:

a) preparing a precursor solution of resorcinol (R), formaldehyde (F) and graphene oxide (GO) by dissolving resorcinol in a graphene oxide aqueous suspension under constant stirring, said graphene oxide aqueous suspension having a concentration in graphene oxide between 5mg/ml and 10 mg/ml, and then, adding formaldehyde, wherein the moles of formaldehyde added are double that the moles of resorcinol and wherein the dilution ratio (D) is 60, being

dilution ratio (D) = (moles R+ moles F)/(mol of total solvent)

b) adjusting the pH of the precursor solution obtained in step (a) to 5 by adding NaOH,
c) heating the mixture obtained in step (b) at a temperature range between 70 °C and 95 °C by means of a microwave oven for a period of time of at least 3 h,
d) dehydrating the organic polymer obtained in step (c) by means of a freeze-dryer for a period of time of at least 24 h,
e) carbonizing the dried aerogel obtained in step (d) at a temperature between 1000 °C and 1100°C, under inert atmosphere for a period of time of at least 1 h.

11. A process according to claim 10 wherein the graphene oxide aqueous suspension mentioned in step a) has a concentration in graphene oxide of 5mg/ml.

12. A process according to claim 10 or 11 wherein the formaldehyde is added in the form of a water solution or water/methanol solution in a concentration of between 36 wt.% and 38 wt.%.

13. A process according to any of claims 10 to 12 wherein the heating of step (b) is carried out at 85 °C and /or between 3 h and 5 h.

14. A process according to any of claims 10 to 13 wherein the dehydrating step (c) is carried out a time between 24 h and 72 h.

15. Electrode for electrochemical devices comprising the aerogel defined in any of claims 1 o 2 or the aerogel defined in any of claims 8 and 9.

FIG. 1

FIG. 1 cont.

FIG. 2

FIG. 3

FIG. 4

Europäisches
Patentamt

European
Patent Office

Office européen
des brevets

# EUROPEAN SEARCH REPORT

Application Number

EP 21 38 2400

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | DOS SANTOS-GÓMEZ LUCÍA ET AL: "Ultralight-Weight Graphene Aerogels with Extremely High Electrical Conductivity", SMALL, vol. 17, no. 41, 12 October 2021 (2021-10-12), page 2103407, XP55866913, ISSN: 1613-6810, DOI: 10.1002/smll.202103407 Retrieved from the Internet: URL:https://onlinelibrary.wiley.com/doi/full-xml/10.1002/smll.202103407> * the whole document * * the document is cited as technical background only * ----- | 1-7,15 | INV. C01B32/198 C01B32/00 B01J13/00 |
| A | US 2012/034442 A1 (PAUZAUSKIE PETER J [US] ET AL) 9 February 2012 (2012-02-09) * paragraphs [0168] - [0174]; claims 1,11-31,; figures 10,11,26; table 1 * * the whole document * ----- | 1-7,15 | |
| A | DATABASE WPI Week 201723 Thomson Scientific, London, GB; AN 2017-10330A XP002804900, -& CN 106 365 142 A (UNIV TONGJI) 1 February 2017 (2017-02-01) * abstract; claim 1 * * citations refer to the machine transpation into English * * the whole document * ----- | 1-7,15 | TECHNICAL FIELDS SEARCHED (IPC)  C01B B01J |

-/--

The present search report has been drawn up for all claims

| Place of search | Date of completion of the search | Examiner |
|---|---|---|
| The Hague | 1 December 2021 | Straub, Thomas |

EPO FORM 1503 03.82 (P04C01)

| | Europäisches<br>Patentamt<br>European<br>Patent Office<br>Office européen<br>des brevets | **EUROPEAN SEARCH REPORT** | Application Number<br><br>EP 21 38 2400 |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| A | LIZENG ZUO ET AL: "Polymer/Carbon-Based<br>Hybrid Aerogels: Preparation, Properties<br>and Applications",<br>MATERIALS,<br>vol. 8, no. 10,<br>9 October 2015 (2015-10-09), pages<br>6806-6848, XP055332426,<br>DOI: 10.3390/ma8105343<br>* 2.3.4. Other Drying Methods *<br>* the whole document *<br>----- | 1-7,15 | |
| | | | **TECHNICAL FIELDS<br>SEARCHED (IPC)** |

The present search report has been drawn up for all claims

| Place of search | Date of completion of the search | Examiner |
|---|---|---|
| The Hague | 1 December 2021 | Straub, Thomas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

page 2 of 2

## ANNEX TO THE EUROPEAN SEARCH REPORT
## ON EUROPEAN PATENT APPLICATION NO.

EP 21 38 2400

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2021

| Patent document cited in search report | Publication date | Patent family member(s) | Publication date |
|---|---|---|---|
| US 2012034442 A1 | 09-02-2012 | US 2012034442 A1<br>US 2015175425 A1 | 09-02-2012<br>25-06-2015 |
| CN 106365142 A | 01-02-2017 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **REY-RAAP, N. ; MENÉNDEZ, J.A. ; ARENILLAS, A.** Simultaneous adjustment of the main chemical variables to fine-tune the porosity of carbon xerogels. *Carbon,* 2014, vol. 78, 490-499
- **WANG, Q. ; YAN, J. ; FAN, Z.** Carbon materials for high volumetric performance supercapacitors: design, challenges and opportunities. *Energy Environ. Sci.,* 2016, vol. 9, 729-762
- **ZHANG, L.L. ; ZHAO, X. ; STOLLER, M.D. ; ZHU, Y. ; HENGXING, J. ; MURALI, S. ; WU, Y. ; PERALES, S. ; CLEVENGER, B. ; RUOFF, R.S.** Highly conductive and porous activated reduced graphene oxide films for high-power supercapacitors. *Nano Lett.,* 2012, vol. 12, 1806-1812
- **WORSLEY, M.A. ; PAUZAUSKIE, P.J. ; OLSON, T.Y. ; BIENER, J. ; SATCHER, J.H. ; BAUMANN, T.F.** Synthesis of graphene aerogel with high electrical conductivity. *J. Am. Chem. Soc.,* 2010, vol. 132, 14067-14069
- **LEE, C. ; WEI, X. ; KYSAR, J.W. ; HONE, J.** Measurement of the elastic properties and intrinsic strength of monolayer graphene. *Science,* 2008, vol. 321, 385-388
- **BIANCO, A. ; CHEN, Y. ; CHEN, Y. ; GHOSHAL, D. ; HURT, R.H. ; KIM, Y.A. ; KORATKAR, N. ; MEUNIER, V. ; TERRONES, M.** A carbon science perspective in 2018: current achievements and future challenges. *Carbon,* 2018, vol. 132, 785-801
- **HUANG, H. ; CHEN, P. ; ZHANG, X. ; LU, Y. ; ZHAN, W.** Edge-to-edge assembled graphene oxide aerogels with outstanding mechanical performance and superhigh chemical activity. *Small,* 2013, vol. 9, 1397-1404
- **BAI, H. ; LI, C. ; WANG, X. ; SHI, G.** On the gelation of graphene oxide. *J. Phys. Chem. C,* 2011, vol. 115, 5545-5551
- **LI, C. ; WU, Z.Y. ; LIANG, H.W. ; CHEN, J.F. ; YU, S.H.** Ultralight multifunctional carbon-based aerogels by combining graphene oxide and bacterial cellulose. *Small,* 2017, vol. 13, 1700453
- **YE, S. ; LIU, Y. ; FENG, J.** Low-density, mechanical compressible, water-induced self-recoverable graphene aerogels for water treatment. *ACS Appl. Mater. Interfaces,* 2017, vol. 9, 22456-22464
- **HU, K. ; SZKOPEK, T. ; CERRUTI, M.** Tuning the aggregation of graphene oxide dispersions to synthesize elastic, low density graphene aerogels. *J. Mater. Chem. A,* 2017, vol. 5, 23123-23130
- **HUANG, H. ; CHEN, P. ; ZHANG, X. ; LU, Y. ; ZHAN, W.** Edge-to-edge assembled graphene oxide aerogels with outstanding mechanical performance and superhigh chemical activity. *Small,* 2013, vol. 9, 1397-1404
- **YANG, H. ; LI, Z. ; LU, B ; GAO, J. ; JIN, X. ; SUN, G. ; ZHANG, G. ; ZHANG, P. ; QU, L.** Reconstruction of inherent graphene oxide liquid crystals for large-scale fabrication of structure-intact graphene aerogel bulk toward practical applications. *ACS Nano,* 2018, vol. 12, 11407-11416
- **CAO, X. ; YIN, Z. ; ZHANG, H.** Three-Dimensional Graphene Materials: Preparation, Structures and Application in Supercapacitors. *Energy Environ. Sci.,* 2014, vol. 7, 1850-1865
- **NARDECCHIA, S. ; CARRIAZO, D. ; FERRER, M.L. ; GUTIÉRREZ, M.C. ; DEL MONTE, F.** Three dimensional macroporous architectures and aerogels built of carbon nanotubes and/or graphene: synthesis and applications. *Chem. Soc. Rev.,* 2013, vol. 42, 794-830
- **GOLSHEIKH, A.M. ; HUANG, N.M., ; LIM, H.N. ; ZAKARIA, R.** One-pot sonochemical synthesis of reduced graphene oxide uniformly decorated with ultrafine silver nanoparticles for non-enzymatic detection of H2O2 and optical detection of mercury ions. *RSC Adv.,* 2014, vol. 4, 36401-36411
- **MARKOVIC, Z.M. ; BABIC, B.M. ; DRAMICANIN, M.D. ; HOLCLAJTNER ANTUNOVIC, I.D. ; PAVLOVIC, V.B. ; PERUSKO, D.B ; MARKOVIC, B.M.T.** Preparation of highly conductive carbon cryogel based on pristine graphene. *Synth. Met.,* 2012, vol. 162, 743-747
- **CHEN, X. ; LAI, D. ; YUAN, B. ; FU, M.L.** Fabrication of superelastic and highly conductive graphene aerogels by precisely "unlocking" the oxygenated groups on graphene oxide sheets. *Carbon,* 2020, vol. 162, 552-561
- **LONG, S. ; FENG, Y. ; HE, F. ; HE, S. ; HONG, H. ; YANG, X. ; ZHENG, L. ; LIU, J. ; GAN, L. ; LONG, M.** An ultralight, supercompressible, superhydrophobic and multifunctional carbon aerogel with a specially designed structure. *Carbon,* 2020, vol. 158, 137-145

- **CHENG, Y. ; ZHOU, S. ; HU, P. ; ZHAO, G. ; LI, Y. ; ZHANG, X. ; HAN, W.** Enhanced mechanical, thermal, and electric properties of graphene aerogels via supercritical ethanol drying and high-temperature thermal reduction. *Sci. Rep.,* 2017, vol. 7, 1439
- **DONG, D. ; GUO, H. ; LI, G. ; YAN, L. ; ZHANG, X. ; SONG, W.** Assembling hollow carbon sphere-graphene polylithic aerogels for thermoelectric cells. *Nano Energy,* 2017, vol. 39, 470-477
- **ZHAO, J. ; PAN, R. ; SUN, R. ; WEN, C. ; ZHANG, S.L. ; WU, B. ; NYHOLM, L. ; ZHANG, Z.B.** High-conductivity reduced-graphene-oxide/copper aerogel for energy storage. *Nano Energy,* 2019, vol. 60, 760-767

- **CANAL-RODRIGUEZ, M. ; ARENILLAS, A. ; REY-RAAP, N. ; RAMOS-FERNANDEZ, G. ; MARTIN-GULLÓN, I. ; MENÉNDEZ, J.A.** Graphene-doped carbon xerogel combining high electrical conductivity and surface area for optimized aqueous supercapacitors. *Carbon,* 2017, vol. 118, 291-298
- **WANG, Z. ; SHEN, X. ; GARAKANI, M.A. ; LIN, X. ; WU, Y. ; LIU, X. ; SUN, X. ; KIM, J.K.** Graphene aerogel/epoxy composites with exceptional anisotropic structure and properties. *ACS Appl. Mater. Interfaces,* 2015, vol. 7, 5538-5549